# FASCICULE DE BREVET EUROPEEN

(11) **EP 0 379 459 B1**
(45) Date de publication et mention de la délivrance du brevet: **28.04.1993**
(21) Numéro de dépôt: 90470001.0
(22) Date de dépôt: 09.01.1990
(51) Int. Cl.: A61C 1/05

(54) **Procédé et dispositif de pulvérisation pour pièces à main et contre-angles de dentisterie**
Zerstäubungsvorrichtung und Verfahren für zahnärztliche Handstücke
Pulverizing device and method for dental hand pieces

(30) Priorité: 17.01.1989 FR 8900635
(43) Date de publication de la demande: 25.07.1990
(73) Titulaire: MICRO MEGA S.A., F-25000 Besançon (FR)
(72) Inventeur: Badoz, Jean-Marie, F-25300 Pontarlier (FR); Pernot, Jacques, F-25870 Geneuille (FR)
(74) Mandataire: Poupon, Michel

(56) Documents cités:
- EP-A- 0 236 820
- DE-A- 3 123 390

## Description

La présente invention a pour objet un dispositif équipant la tête d'une pièce à main ou d'un contre-angle de dentisterie, ladite tête étant conformée pour recevoir un outil entraîné à rotation par des moyens logés à l'intérieur de ladite pièce à main ou dudit contre-angle ainsi que de ladite tête, la tête étant munie de moyens de maintien de l'outil, dispositif du type comportant dans le corps de la pièce à main ou du contre-angle d'une part et de la tête d'autre part des moyens d'amenée et de distribution vers la zone à traiter d'eau et d'air amenés à se mélanger pour former un mélange pulvérisé dit "spray" destiné à refroidir la zone traitée et l'outil et à évacuer les résidus provenant du travail de l'outil, l'eau et l'air étant amenés à partir de conduites longitudinales du corps vers des chambres annulaires de la tête desquelles ils débouchent vers l'extérieur par une pluralité d'alésages dont l'axe est dirigé vers la pointe de l'outil.

Des dispositifs de ce type sont en eux-mêmes connus de longue date.

Ils équipent les dispositifs de pulvérisation en fluide de refroidissement des instruments dentaires tels que fraises, alésoirs, etc..., équipant les pièces à main ou les contre-angles de dentisterie.

Plus précisément l'invention concerne un dispositif de pulvérisation intégré à la tête de la pièce à main ou du contre-angle, assurant la pulvérisation en plusieurs points situés par exemple sous la tête du contre-angle répartis autour du logement de queue de fraise.

L'invention est applicable tant aux pièces à main à turbine qu'aux contre-angles dans lesquels l'instrument est mû par un dispositif moteur à engrenages.

Un tel dispositif de pulvérisation est décrit par exemple dans la demande de brevet européen 0236 820.

Il permet de réaliser un ou plusieurs jets d'eau pulvérisée par un même nombre de jets d'air. Ce dispositif assure sans doute un arrosage efficace de l'outil ou instrument tournant quand il s'agit d'instrument tournant à basse vitesse, par contre les instruments tournant à grande vitesse, ce qui est le cas des fraises montées sur une turbine, provoquent autour d'eux une turbulence qui tend à éloigner le liquide de refroidissement de la fraise qui risque alors de n'être plus suffisamment arrosée, donc insuffisamment refroidie.

D'autres systèmes existent tel que par exemple celui décrit dans le brevet DE 31 23 390 ou apparaissent dans le brevet FR 2 206 073. Ces dispositifs présentent l'inconvénient que lorsque les pressions d'eau et d'air ne sont pas correctement réglées l'une par rapport à l'autre il y a un retour d'un des fluides dans la ou les canalisations de l'autre fluide provoquant des effets de pulsation de l'arrosage.

Enfin, tous les dispositifs de l'art antérieur présentent l'inconvénient que lorsque la pulvérisation est stoppée par le praticien une goutte d'eau a tendance à stagner à la sortie des orifices d'arrosage, l'élimination de ladite goutte nécessitant soit un dispositif dit ravale-goutte qui est déconseillé car la ré-absorption d'une goutte dans les tuyaux de fluide provoque une pollution desdits tuyaux incomptatiles avec la recherche de réduction des risques de contamination croissée, soit un effet de souflage d'air qui impose un arrêt de l'air après que l'eau ait été coupée, dispositif dont tous les appareillages dentaires ne sont pas pourvus.

La présente invention a pour but de proposer un dispositif de pulvérisation pour pièces à main et contre-angles dentaires résolvant les problèmes ci-dessus et évitant les risques de pénétration dans la tête du contre-angle de particules polluées.

L'invention à également pour objet un procédé pour éviter un tel risque de pénétration.

Conformément à l'invention, on propose tout d'abord un procédé de pulvérisation pour pièces à main et contre-angles de dentisterie, caractérisé en ce qu'il consiste à créer au niveau du logement de l'outil dans la pièce à main ou le contre-angle un effet d'aspiration mettant le voisinage du logement de fraise en légère dépression, sous l'effet d'un cône d'air, dont le sommet est situé à l'endroit actif de l'outil, ce cône d'air ayant pour autre fonction de diriger le liquide de refroidissement par un effet du type COANDA réduisant les conséquences des turbulences dues à la rotation de l'outil ou instrument.

Ce procédé est mis en oeuvre conformément à l'invention grâce à un dispositif équipant la tête d'une pièce à main ou d'un contre-angle de dentisterie, ladite tête étant conformée pour recevoir un outil entrainé à rotation par des moyen logés à l'intérieur de ladite pièce à main ou dudit contre-angle ainsi que de ladite tête, la tête étant munie de moyens de maintien de l'outil, dispositif du type comportant dans le corps de la pièce à main ou du contre-angle d'une part et de la tête d'autre part des moyens d'amenée et de distribution vers la zone à traiter d'eau et d'air amenés à se mélanger pour former un mélange pulvérisé et à évacuer les résidus provenant du travail de l'outil, l'eau et l'air étant amenés à partir de conduites longitudinales du corps vers des chambres annulaires de la tête, desquelles ils débouchent vers l'extérieur par une pluralité d'alésages dont l'axe est dirigé vers la pointe de l'outil, dispositif caractérisé en ce qu'il délivre sous ladite tête, au travers d'un orifice de révolution dont l'axe est orienté vers la pointe de l'outil, un cône d'air de faible épaisseur et que, au voisinage immédiat dudit cône d'air, intérieurement ou extérieurement par rapport à celui-ci, sont réalisés des jets d'eau répartis à sa périphérie, chacun de ces jets d'eau pouvant être entouré d'un jet d'air de section sensiblement annulaire à son origine.

Les jets d'air ont pour effet de pulvériser l'eau alors que le cône d'air provoque en son intérieur un vide partiel par le fait qu'il entraine par frottement gazeux l'air initialement statique, ce même effet ayant pour résultat soit à l'intérieur, soit à l'extérieur de guider l'eau pulvérisée vers la pointe de l'outil (fraise) donnant un effet maximum de refroidissement.

On comprendra mieux l'invention à l'aide de la description faite ci-après d'exemples non limitatifs de mise en oeuvre en référence aux dessins annexés dans lesquels :
- la figure 1 est une vue en coupe d'un dispositif conforme à l'invention,
- la figure 2 est une demi-vue selon F de la figure 1,
- la figure 3 est une demi-vue en coupe d'un dispositif selon l'invention, selon un mode de réalisation dans lequel les jets sont à l'intérieur du cône d'air,
- la figure 4 est une vie schématique partielle en plan d'une variante
- la figure 4A est une coupe partielle de la variante de la figure 4.

On rappellera tout d'abord que selon le procédé général de l'invention, on crée au niveau du logement de l'outil dans la pièce à main ou le contre-angle un effet d'aspiration mettant le voisinage du logement de fraise en légère dépression, sous l'effet d'un cône d'air dont le sommet est situé à l'endroit actif de l'outil.

On associe à cette structure une pluralité de jets d'eau disposés sur la périphérie dudit cône intérieurement ou extérieurement, lesdits jets étant en nombre indifférent.

Avantageusement et toujours selon le même procédé, chaque jet d'eau sera entouré d'un cylindre d'air destiné à réaliser une pulvérisation.

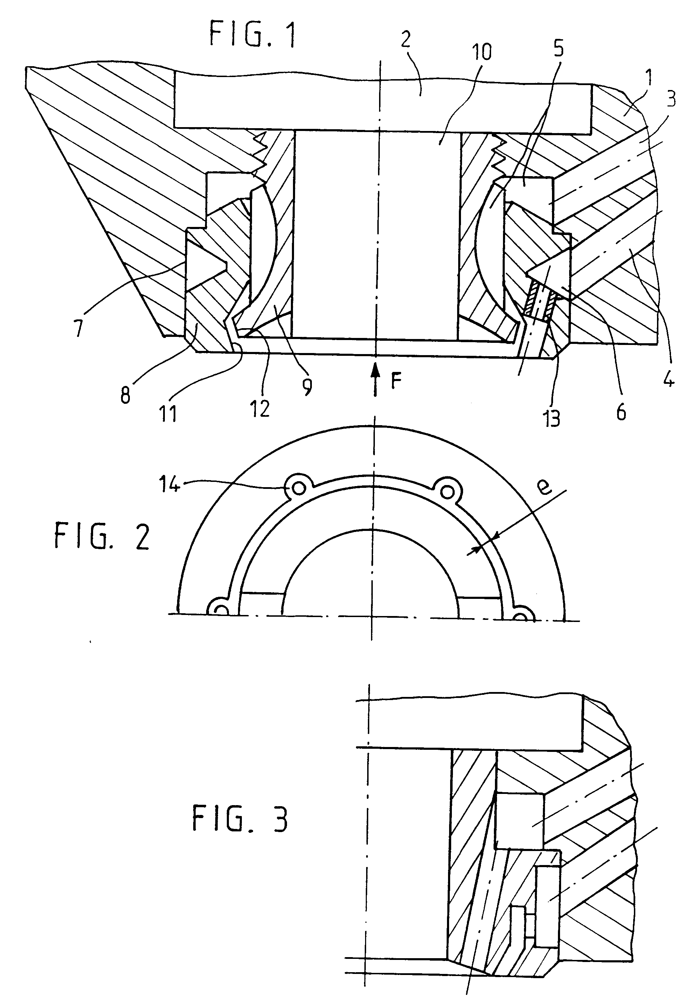

Les figures 1 et 2 représentent un mode de réalisation de l'invention dans lequel une tête de contre-angle (1) peut recevoir dans un logement (2) soit un dispositif de turbine à air soit un dispositif d'un contre-angle à engrenage non représenté. La tête de contre-angle (1) est pourvue de deux canaux de fluides respectivement d'air (3) et d'eau (4), réalisés de manière connue débouchant respectivement dans des volumes creux de révolution (5) et (6) obtenus par la mise en place dans l'alésage (7) de la tête (1) d'une bague (8) montée de façon étanche grâce à des moyens connus dans la tête (1) et d'une douille (9) passant dans (8) et ménageant en suivant son axe un alésage (10) de passage de queue d'instrument rotatif non représenté. La bague (8) possède un cône femelle (11) associé et concentrique à un cône mâle (12) et (9) de façon que l'air sous pression venant de (3) soit projeté à l'extérieur de la tête en formant un cône d'air creux d'épaisseur de paroi (e) à son origine.

La bague (8) reçoit des douilles (13) faisant office de gicleurs d'eau réparties autour de la base du cône d'air et orientées de telle façon que le jet d'eau soit suffisamment proche du cône pour bénéficier de l'effet COANDA. De plus, le jet débouche dans un alésage (14) qui peut être seccant avec le cône (11), ce qui a pour effet de créer un cylindre d'air continu avec le cône d'air renforçant à la fois l'effet de pulvérisation et l'effet de protection du jet d'eau des turbulences que crée une queue de fraise en rotation.

A la figure 3 on a représenté une structure simplifiée, dans laquelle les jets d'eau ne sont pas entourés de cylindres d'air, les jets d'eau étant alors nécessairement internes au cône d'air.

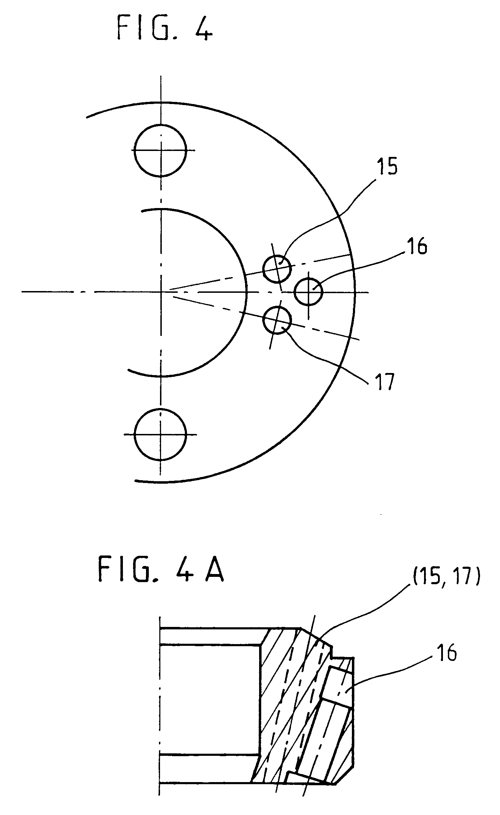

Dans la variante de la figure 4, le même résultat est obtenu en remplaçant le cône d'air et les perçages d'eau par des groupes de trois perçages (15,16,17) disposés en triangle, comprenant deux perçages (15,17) pour l'air encadrant un perçage (16) pour l'eau. Il pourra y avoir par exemple deux groupes diamétralement opposés.

## Revendications

1. Procédé de pulvérisation pour pièces à main et contre-angles de dentisterie, caractérisé en ce qu'il consiste à créer au niveau du logement de l'outil dans la pièce à main ou le contre-angle un effet d'aspiration mettant le voisinage du logement de fraise en légère dépression, sous l'effet d'un cône d'air, dont le sommet est situé à l'endroit actif de l'outil, ce cône d'air ayant pour autre fonction de diriger le liquide de refroidissement par un effet du type COANDA réduisant les conséquences des turbulences dues à la rotation de l'outil ou instrument.

2. Procédé selon la revendication 1, caractérisé en ce qu'il met en oeuvre une pluralité de jets d'eau disposés sur la périphérie dudit cône, intérieurement ou extérieurement, lesdits jets étant en nombre indifférent.

3. Procédé selon la revendication 1, caractérisé en ce que chaque jet d'eau est entouré d'un cylindre d'air (14) destiné à réaliser une pulvérisation.

4. Dispositif équipant la tête d'une pièce à main ou d'un contre-angle de dentisterie (1), ladite tête étant conformée pour recevoir un outil entraîné à rotation par des moyens logés à l'intérieur de ladite pièce à main ou dudit contre-angle ainsi que de ladite tête, la tête étant munie de moyens de maintien de l'outil, dispositif du type comportant dans le corps de la pièce à main ou du contre-angle d'une part et de la tête d'autre part des moyens d'amenée et de distribution vers la zone à traiter d'eau (3) et d'air (4) amenés à se mélanger pour former un mélange pulvérisé dit "spray" destiné à refroidir la zone traitée et l'outil et à évacuer les résidus provenant du travail de l'outil, l'eau et l'air étant amenés à partir de conduites longitudinales du corps vers des chambres annulaires de la tête, desquelles ils débouchent vers l'extérieur par une pluralité d'alésages dont l'axe est dirigé vers la pointe de l'outil, dispositif caractérisé en ce qu'il délivre sous ladite tête, au travers d'un orifice de révolution dont l'axe est orienté vers la pointe de l'outil, un cône d'air de faible épaisseur et que, au voisinage immédiat dudit cône d'air, intérieurement ou extérieurement par rapport à celui-ci, sont réalisés des jets d'eau répartis à sa périphérie, chacun de ces jets d'eau pouvant être entouré d'un jet d'air (14) de section sensiblement annulaire à son origine.

5. Dispositif selon la revendication 4, ou la tête de contre-angle (1) est pourvue de deux canaux de fluides respectivement d'air (3) et d'eau (4), débouchant respectivement dans des volumes creux de révolution (5) et (6) obtenus par la mise en place dans l'alésage (7) de la tête (1) d'une bague (8) montée de façon étanche grâce à des moyens connus dans la tête (1) et d'une douille (9) passant dans la bague (8) et ménageant en suivant son axe un alésage (10) de passage de queue d'instrument rotatif, la bague (8) possédant un cône femelle (11) associé et concentrique à un cône mâle (12) et une douille (9) de façon que l'air sous pression venant du canal d'air (3) soit projeté à l'extérieur de la tête en formant un cône d'air creux d'épaisseur de paroi (e) à son origine.

6. Dispositif selon la revendication 5, caractérisé en ce que la bague (8) reçoit des douilles (13) faisant orifice de gicleurs d'eau réparties autour de la base du cône d'air et orientées de telle façon que le jet d'eau soit suffisamment proche du cône pour bénéficier de l'effet COANDA.

7. Dispositif selon la revendication 4, modifié en ce que la caractéristique "un orifice de révolution" est remplacée par la caractéristique "des groupes de trois perçages (15,16,17) sont disposés en triangle, comprenant deux perçages (15,17) pour l'air encadrant un perçage (16) pour l'eau."

8. Dispositif selon la revendication 7, caractérisé en ce qu'il comporte deux groupes de perçages diamétralement opposés.

## Claims

1. Method of atomization for dental hand-pieces and counter-angles, characterised in that it comprises providing an aspiration effect on a level with the seat of the tool in the hand-piece or counter-angle, slightly depressing the area around the seat of the drill, under the effect of a cone of air, the top of which is situated at the active location of the tool, this cone of air having the other function of directing the cooling liquid by a COANDA-type effect, thereby reducing the consequences of the turbulence phenomena caused by the rotation of the tool or instrument.

2. Method according to claim 1, characterised in that it sets in operation a plurality of jets of water disposed on the periphery of said cone, internally or externally, said jets being of any number.

3. Method according to claim 1, characterised in that each jet of water is surrounded by a cylinder of air (14) intended to achieve atomization.

4. Device equipping the head of a dental hand-piece or counter-angle (1), said head being designed to accommodate a tool rotatably driven by means situation inside said hand-piece or said counter-angle as well as said head, the head being provided with means retaining the tool, such device being of the type comprising, in the body of the hand-piece or counter-angle on the one hand and of the head on the other hand, means for supplying and distributing water (3) and air (4) towards the treatment zone, the water and air being caused to mix to form a so-called "spray" mixture, which is intended to cool the treated zone and the tool and to evacuate the residues arising from the operation of the tool, the water and the air being caused to depart from longitudinal conduits of the body towards annular chambers of the head, from which they discharge outwardly via a plurality of bores, the axis of which is directed towards the point of the tool, said device being characterised in that it delivers a thin cone of air underneath said head, through a revolving orifice whose axis is orientated towards the point of the tool, and in that, in the immediate vicinity of said cone of air, internally or externally relative thereto, jets of water are distributed along its periphery, each of these jets of water being capable of being surrounded by a jet of air (14) having a substantially annular cross-section at its point of origin.

5. Device according to claim 4, in which the counter-angle head (1) is provided with two fluid channels, one for air (3) and one for water (4), which discharge respectively into revolving orifices (5) and (6) obtained by placing in the bore (7) of the head (1) a ring (8), mounted in thight manner by known means in the head (1), and a nozzle (9) passing into the ring (8) and creating, by following its axis, a through bore (10) for the base of a rotatable instrument, the ring (8) having a female cone (11) associated with and concentric to a male cone (12) and a nozzle (9) in such a way that the compressed air coming from the air channel (3) is projected to the exterior of the head, thereby forming a hollow cone of air of wall thickness (e) at its point of origin.

6. Device according to claim 5, characterised in that the ring (8) accomodates nozzles (13) forming atomizer orifices distributed around the base of the cone of air and orientated in such a way that the jet of water is sufficiently close to the cone to benefit from the COANDA effect.

7. Device according to claim 4, modified in that the feature "revolving orifice" is replaced by the feature "groups of three holes (15, 16, 17) are disposed in the triangle, comprising two holes (15, 17) for the air surrounding one hole (16) for the water".

8. Device according to claim 7, characterised in that it comprises two groups of diametrically opposed holes.

## Patentansprüche

1. Zerstäubungsverfahren für zahnärztliche Handstücke und Haltewinkel, **dadurch gekennzeichnet**, daß in Höhe der Werkzeugaufnahme im Handstück oder Haltewinkel ein Saugeffekt herbeigeführt wird, welcher die Nahe der Aufnahme des Fräsers durch die Wirkung eines Luftkegels unter leichtem Unterdruck hält, dessen Spitze sich an der aktiven Stelle des Werkzeugs befindet, wobei der Luftkegel weiterhin die Funktion hat, die Kühlflüssigkeit durch einen COANDA-Effekt zur richten und die Wirkungen von Turbulenzen aufgrund der Rotation des Werkzeugs oder Instrumentes zu reduzieren.

2. Verfahren nach Anspruch 1, **dadurch gekennzeichnet,** daß man zu seiner Durchführung eine Vielzahl von Wasserdüsen innenseitig oder außenseitig am Rand des genannten Kegels anordnet, wobei die Düsen eine beliebige Anzahl aufweisen.

3. Verfahren nach Anspruch 1, **dadurch gekennzeichnet,** daß jede Wasserdüse von einem Luftzylinder (14) umgeben ist, um eine Zerstäubung herbeizuführen.

4. Vorrichtung, welche mit einem Kopf eines zahnärztlichen Handstückes oder Haltewinkels (1) ausgerüstet ist, wobei der genannte Kopf dazu ausgebildet ist, ein Werkzeug aufzunehmen, welches durch im Inneren des genannten Handstückes oder Haltewinkels sowie des genannten Kopfes angeordnete Antriebsmittel angetrieben wird und wobei der Kopf mit Haltemitteln für das Werkzeug ausgestattet ist und wobei die Vorrichtung derart ist, daß sie im Gehäuse des Handstückes oder des Haltewinkels einerseits und in dem Kopf andererseits Mittel zum Zuführen von Wasser (3) und zugeführter, zu vermischender Luft (4) zum Verteilen auf die Behandlungszone aufweist, um ein zerstäubtes Gemisch, genannte "Spray", zu bilden, welches zum Kühlen der Behandlungszone und des Werkzeugs und zum Absaugen von durch die Arbeit des Werkzeugs erzeugten Rückständen bestimmt ist, wobei das Wasser und die Luft über im Gehäuse in Längsrichtung zu ringförmigen Kammern des Kopfes führenden Leitungen zugeführt ist, aus der es und die Luft nach außen durch eine Vielzahl von Bohrungen herausgelangt, deren Achsen auf die Spitze des Werkzeugs gerichtet sind, **dadurch gekennzeichnet**, daß sie unterhalb des genannten Kopfes schräg zu einer umlaufenden Öffnung, deren Achse zur Spitze des Werkzeugs gerichtet ist, einen Luftkegel schwacher Dicke liefert und daß in unmittelbarer Nähe des genannten Luftkegels innerhalb oder außerhalb von ihm Wasserdüsen an seiner Peripherie angeordnet sind und jede der Düsen von einer Luftdüse (14) umgeben sein kann, welche von ihrem Ursprung an im wesentlichen im Querschnitt kreisförmig ist.

5. Vorrichtung nach Anspruch 4, bei der der Kopf des Haltewinkels (1) mit zwei Strömungsmittelkanälen für Luft (3) einerseits und Wasser (4) andererseits versehen ist, welche jeweils in umlaufende Hohlkammern (5, 6) münden, welche durch die durch bekannte Mittel abgedichtete Anordnung eines Ringes (8) in der Bohrung (7) des Kopfes (1) und einer in den Ring (8) hineinführenden Buchse (9) gebildet sind, die auf ihrer Achse eine Durchgangsbohrung (10) für das Ende eines rotierenden Instrumentes hat und bei der der Ring (8) einen Innenkonus (11) besitzt, welcher zu einem Außenkonus (12) und einer Buchse (9) konzentrisch derart verläuft, daß die vom Kanal (3) unter Druck ankommende Luft aus dem Kopf unter Bildung eines hohlen Luftkegels mit einer Wandstärke (e) an seinem Ursprung austritt.

6. Vorrichtung nach Anspruch 5, **dadurch gekennzeichnet**, daß der Ring (8) Buchsen (13) aufweist, welche Zerstäuberdüsen für das Wasser bilden, welches sich um die Basis des Luftkegels verteilt und derart ausgerichtet ist, daß der Wasserstrahl sich ausreichend nahe zu dem Konus befindet, um den COANDA-Effekt zu nutzen.

7. Vorrichtung nach Anspruch 4, welche dadurch abgewandelt ist, daß das Merkmal "eine umlaufende Öffnung" durch das Merkmal ersetzt ist, daß "Gruppen von drei Bohrungen (15, 16, 17) unter Bildung eines Dreiecks angeordnet sind, welche zwei Bohrungen (15, 16) für die Luft aufweisen, die eine Bohrung (16) für das Wasser einschließen."

8. Vorrichtung nach Anspruch 7, **dadurch gekennzeichnet,** daß sie zwei Gruppen von diametral gegenüberliegenden Bohrungen enthält.
